# Europäisches Patentamt
# European Patent Office
# Office européen des brevets

(19)

(11) Numéro de publication: **0 173 604**
**B1**

(12) # FASCICULE DE BREVET EUROPÉEN

(45) Date de publication du fascicule du brevet:
**21.09.88**

(51) Int. Cl.⁴: **F 16 G  13/06**

(21) Numéro de dépôt: **85401470.1**

(22) Date de dépôt: **17.07.85**

(54) **Chaine de transmission.**

(30) Priorité: **03.08.84  FR 8412358**

(43) Date de publication de la demande:
**05.03.86 Bulletin 86/10**

(45) Mention de la délivrance du brevet:
**21.09.88 Bulletin 88/38**

(84) Etats contractants désignés:
**BE DE FR GB IT LU NL**

(56) Documents cité:
**FR-E-2 428 769**
**GB-A-530 186**
**GB-A-830 700**
**GB-A-2 000 846**

(73) Titulaire: **COMPAGNIE DES TRANSMISSIONS MECANIQUES SEDIS, Tour Avenir Ouest 64, Rue du 8 Mai 1945, F-92025 Nanterre Cédex (FR)**
Titulaire: **SACHS- HURET S.A., 60, Avenue Félix Faure, F-92000 Nanterre (FR)**

(72) Inventeur: **Dupoyet, Guy, Les Dagues Grange l'Evêque, F-10300 Sainte- Savine (FR)**

(74) Mandataire: **Moncheny, Michel, c/o Cabinet Lavoix 2 Place d'Estienne d'Orves, F-75441 Paris Cedex 09 (FR)**

LIBER, STOCKHOLM 1988

EP 0 173 604 B1

## Description

La présente invention concerne les chaînes de transmission et notamment des chaînes à rouleaux pouvant être utilisées sur des cycles ou dans d'autres applications.

De telles chaînes comprennent des maillons alternés, respectivement intérieurs et extérieurs, articulés entre eux et dont chacun est constitué par deux plaques parallèles. Dans un premier type de chaîne (GB-A-830 700), les plaques des maillons intérieurs sont reliées entre elles par des douilles dans lesquelles tourillonnent des axes pleins ou creux fixés entre les deux plaques constituant les maillons extérieurs. Dans un autre type de chaîne FR-A-2 428 769, les plaques constituant les maillons intérieurs comportent sur leurs faces en regard des tétons tubulaires ou canons dans lesquels passent les axes d'articulation entre ces maillons intérieurs et les maillons extérieurs. Les plaques constituant ces derniers peuvent également comporter des tétons tubulaires sur leurs faces en regard. Ces deux types de chaîne sont généralement complétés par des rouleaux, disposés selon le cas autour des douilles reliant les plaques intérieures ou autour des tétons creux de ces mêmes plaques des maillons intérieurs.

Dans les différentes chaînes déjà connues, la largeur de la chaîne ou son encombrement latéral, suivant une direction perpendiculaire à son axe ou en d'autres termes suivant une direction parallèle aux axes d'articulation entre les maillons, est déterminée de la façon suivante: la distance entre les deux faces en regard des plaques constituant les maillons intérieurs doit être au moins égale à l'épaisseur des dents devant s'engager entre ces deux plaques. A cette distance de base s'ajoutent:

- les jeux fonctionnels entre les faces intérieures des plaques intérieures et ces dents:
- l'épaisseur des deux plaques constituant un maillon intérieur ;
- les jeux fonctionnels entre les plaques des maillons intérieurs et les plaques des maillons extérieurs ainsi que, dans certains cas, le débordement des douilles s'étendant entre les deux plaques du maillon intérieur et susceptibles de faire saillie sur les faces externes de ces plaques ;
- l'épaisseur des deux plaques constituant le maillon extérieur ;
- éventuellement, le débordement ou le dépassement des axes d'articulation ou bien un déport vers l'extérieur des plaques extérieures dans la zone des axes d'articulation.

En tout état de cause, dans toutes les chaînes existantes, la distance séparant les plaques constituant un maillon intérieur, que ce soit dans la zone centrale de ces plaques ou dans leurs zones d'extrémité au niveau desquelles sont situés les axes est toujours supérieure à l'épaisseur des dents des pignons avec lesquels la chaîne doit coopérer, cette épaisseur étant mesurée au pied des dents de ces pignons.

Il en résulte que l'épaisseur des chaînes suivant la direction des axes d'articulation entre les maillons ne peut descendre au-dessous d'une certaine valeur, ce qui, notamment, dans l'application aux transmissions à dérailleur pour cycles, a pour conséquence de limiter le nombre de pignons que peut comporter la roue libre et par conséquent le nombre de vitesses du cycle ainsi équipé.

Le but de cette invention est de réaliser une chaîne qui tout en autorisant un fonctionnement avec des pignons ayant une épaisseur de denture déterminée, présente un encombrement et en particulier une largeur transversale réduite par rapport aux chaînes connues.

Elle a donc pour objet une chaîne de transmission, du type comprenant des maillons intérieurs constitués par deux plaques intérieures disposées parallèlement, des maillons extérieurs articulés sur les maillons intérieurs et constitués par deux plaques extérieures disposées également parallèlement, les plaques intérieures et les plaques extérieures comportant une plage centrale et deux plages d'extrémité au niveau desquelles sont disposés les axes d'articulation, les plaques intérieures étant déformées dans leurs plages d'extrémité sur leurs deux faces et délimitant des parties en saillie dirigées vers l'intérieur de la chaîne, caractérisée en ce que lesdites parties en saillie sont séparées d'une distance inférieure à l'épaisseur du pied des dents des pignons avec lesquels la chaîne doit coopérer, les plaques intérieures d'un même maillon intérieur comportant des faces externes respectives qui sont espacées l'une de l'autre d'une discance plus faible à l'emplacement des plages d'extrémité qu'à celui des plages centrales.

Suivant d'autres caractéristiques:
- la chaîne étant du type comportant des rouleaux disposés autour de chaque articulation entre maillons intérieurs et maillons extérieurs, les parties en saillie vers l'intérieur s'étendent sur une zone dont le diamètre correspond à peu près à celui des rouleaux;
- lesdites parties en saillie délimitent dans la zone voisine de la plage centrale une portion de surface adjacente à la périphérie des rouleaux et adaptée pour servir de surface d'appui pour les dents des pignons;
- les plaques intérieures comportent un dégagement le long des bords internes de leurs plages ou parties d'extrémité;
- ce dégagement a la forme d'un chanfrein qui s'étend de préférence entre deux arcs de cercle à peu près concentriques ayant respectivement l'un un rayon inférieur à celui du rouleau et l'autre un rayon supérieur à celui de ce rouleau;
- les rouleaux ont une épaisseur sensiblement inférieure à l'intervalle entre les plages ou parties centrales des plaques intérieures.

L'invention va être décrite plus en détail ci-dessous en se référant au dessin annexé, donné uniquement à titre d'exemple et sur lequel:
- la Fig. 1 est une vue en élévation latérale d'une partie d'une plaque intérieure et d'une partie d'une plaque extérieure d'une chaîne à rouleaux et à douilles, suivant l'invention;

- la Fig. 2 est une vue de dessus et en partie en coupe, suivant la ligne 2-2 de la figure 1 ;

- les Fig. 3 et 4 sont des vues de détail en coupe de deux variantes.

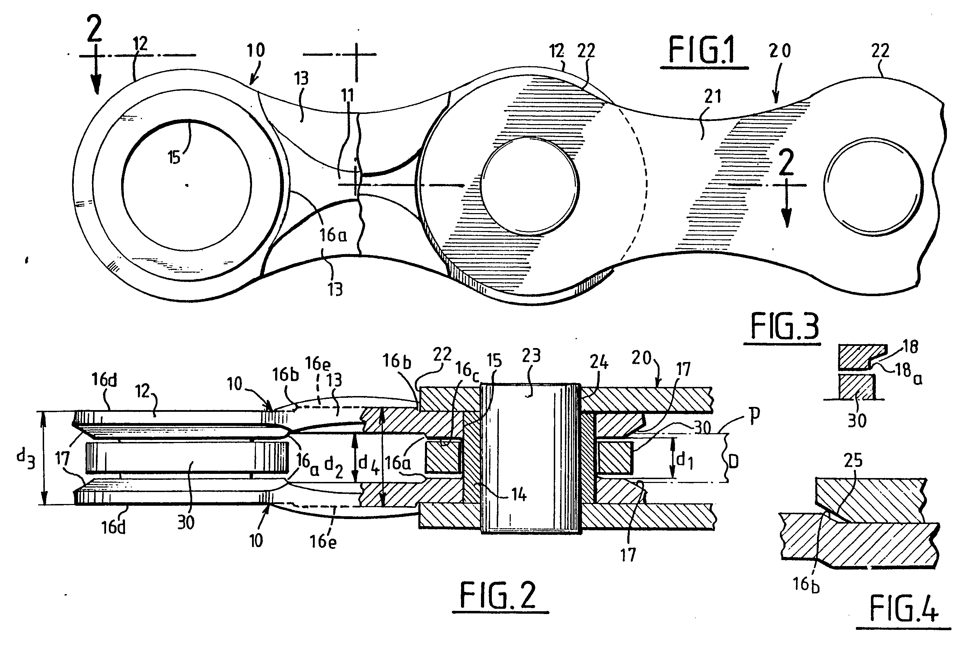

On voit sur le dessin et notamment sur les Figures 1 et 2 une partie d'une chaîne suivant l'invention, dont on n'a représenté qu'un maillon intérieur et une partie d'un maillon extérieur adjacent.

Le maillon intérieur comprend deux plaques dites plaques intérieures 10 constituées chacune d'une plage ou partie centrale 11 et de deux plages ou parties d'extrémité 12 arrondies, la partie centrale ayant en considérant la figure 1 une hauteur inférieure à la hauteur et au diamètre des deux parties d'extrémité. De plus, comme cela est connu, chacune des deux plaques intérieures est déformée vers l'extérieur dans sa partie centrale, le long de ses deux bords, en 13, ainsi que cela est décrit dans le brevet antérieur de la Demanderesse n° FR-A-7 720 793.

Les deux plaques d'un maillon intérieur sont reliées entre elles par deux douilles 14 reçues dans des logements cylindriques 15 prévus dans les zones d'extrémité des plaques.

Un maillon extérieur est constitué par deux plaques planes parallèles 20 ayant en vue en élévation latérale la même forme d'ensemble que les plaques des maillons intérieurs, comme cela apparaît sur la figure 1 et comportant donc également une partie centrale 21 et deux parties d'extrémité arrondies 22. Comme cela est connu, les deux plaques extérieures constituant un maillon extérieur sont reliées par deux axes 23 reçus dans des logements 24 ménagés dans les parties d'extrémité des plaques extérieures, et tourillonnant dans les douilles 14.

La chaîne est complétée par des rouleaux 30 disposés autour des douilles 14.

La description qui précède correspond aux caractéristiques communes entre la chaîne suivant l'invention et une chaîne classique. On va maintenant décrire les caractéristiques originales de cette chaîne.

Comme cela est visible sur la figure 2, les plaques intérieures 10 sont déformées de telle façon que leurs parties d'extrémité sont déportées vers l'intérieur de la chaîne, ce qui se traduit par un décrochement 16a, 16b vers l'intérieur, pour chacune des deux faces interne et externe de ces plaques. Les faces en regard 16c des plages d'extrémité (12) des plaques intérieures sont ainsi séparées d'une distance $d_1$ inférieure à l'épaisseur D des pieds de dent des pignons P sur lesquels la chaîne doit passer et inférieure à la distance $d_2$ entre les parties centrales 11 des plaques 10.

Par contre, ces parties centrales 11 des plaques intérieures ne sont pas sensiblement modifiées et en particulier la distance $d_2$ séparant les deux surfaces internes en regard est déterminée en fonction de l'épaisseur de denture des pignons avec lesquels la chaîne doit coopérer.

De même, la distance $d_3$ séparant les faces externes 16d des plages d'extrémité des plaques intérieures est inférieure à la distance $d_4$ entre les faces externes 16e des parties centrales de ces plaques.

Sur les faces extérieures des plaques intérieures dans la zone de raccordement entre la plage centrale et les plages d'extrémité, la zone déformée vers l'intérieur est délimitée par un arc de cercle de rayon légèrement supérieur au rayon de la plage d'extrémité d'une plaque extérieure qui vient donc se loger en partie dans le décrochement 16b ainsi formé.

Sur la face interne, ce décrochement est également délimité dans la zone de raccordement 16a avec la plage centrale par un arc de cercle, de diamètre à peu près égal ou inférieur à celui du rouleau de façon à pouvoir servir de surface d'appui pour les dents des pignons. Ce dernier a une épaisseur sensiblement plus faible que dans les chaînes connues, par exemple de l'ordre de 1,3 à 1,4 mm au lieu de 2 mm dans les chaînes antérieures, de sorte qu'il peut être constitué par une rondelle pouvant être découpée dans un flan de tôle, ce qui peut constituer un avantage important au plan de la précision et du coût de fabrication.

Suivant une autre caractéristique, les plaques constituant les maillons intérieurs comportent le long des bords internes de leurs plages d'extrémité des dégagements 17, en forme de chanfrein dans l'exemple de la figure 1, dont le bord intérieur s'étend de préférence le long d'un arc de cercle de rayon inférieur à celui du rouleau, tandis que le bord extérieur s'étend le long d'un arc de cercle de diamètre supérieur à celui du rouleau.

En variante, les bords internes des plages d'extrémité des plaques intérieures peuvent avoir une forme différente de la forme en chanfrein représentée à la figure 2 et par exemple présenter la forme d'un décrochement à peu près à angle droit comme représenté en 18 sur la figure 3. Dans ce cas, le rayon de la partie 18a du décrochement est égal ou inférieur à celui du rouleau 30.

Suivant une autre caractéristique, qui apparaît clairement sur la figure 1, les plaques des maillons intérieurs ont dans leurs plages d'extrémité un diamètre supérieur à celui des plaques extérieures;

La chaîne que l'on vient de décrire présente les avantages suivants:

- du fait du déport vers l'intérieur des plages d'extrémité des plaques intérieures, on utilise des rouleaux d'épaisseur plus faible pouvant être découpés dans des flans de tôle et par conséquent plus faciles à fabriquer et d'un moindre coût ;

- pour une épaisseur de denture déterminée ou habituelle D, c'est-à-dire sans modification des pignons avec lesquels la chaîne coopère, l'épaisseur de la chaîne peut être sensiblement réduite, par exemple de l'ordre de 10 % par rapport à une chaîne classique, ce qui est considérable, et ceci sans réduction de l'épaisseur du métal constituant les plaques, tant intérieures qu'extérieures et donc sans diminution de la capacité de transmission de puissance. Dans le cas d'une transmission à dérailleur pour cycle, cet avantage se traduit par la possibilité d'ajouter un pignon supplémentaire à la roue libre, pour un même encombrement latéral, ce qui offre une vitesse supplémentaire à l'utilisateur;

- la présence le long des bords intérieurs des plages d'extrémité des plaques intérieures, d'un chanfrein 17 ou d'un décrochement 18 procure une entrée élargie pour les dents, ce qui apporte un avantage important au plan du fonctionnement en facilitant l'entrée et en améliorant le guidage de la chaîne sur les dents, et ceci bien entendu sans augmentation de l'encombrement latéral;

- la diminution de section le long des bords des plages d'extrémité des plaques intérieures est compensée par une augmentation de diamètre, ce qui permet de conserver suffisamment de matière pour résister aux efforts de traction. Cette même caractéristique peut être mise en oeuvre pour les plaques extérieures, comme représenté dans la variante de la figure 4 où la plaque extérieure s'étend, par un bord 25 de section progressivement décroissante, au-delà du décrochement 16b de la plaque intérieure ;

Bien entendu, l'invention peut être appliquée dans les mêmes conditions et avec les mêmes avantages à une chaîne dans laquelle les douilles reliant les plaques des maillons intérieurs sont remplacées par des canons ou tétons cylindriques venus de matière avec ces plaques.

D'une façon générale, l'invention peut être mise en oeuvre dans tout type de chaîne de transmission comportant ou non des rouleaux, ces derniers pouvant être fabriqués par tout procédé approprié.

**Revendications**

1. Chaîne de transmission, du type comprenant des maillons intérieurs constitués par deux plaques intérieures (10) disposées parallèlement, des maillons extérieurs articulés sur les maillons intérieurs et constitués également par deux plaques extérieures (20) disposées parallèlement, les plaques intérieures et les plaques extérieures comportant une plage centrale (11; 21) et deux plages d'extrémité (12; 22) au niveau desquelles sont disposés les axes d'articulation (23), les plaques intérieures (10) étant déformées dans leurs plages d'extrémité (12) sur leurs deux faces et délimitant des parties en saillie (16c) dirigées vers l'intérieur de la chaîne, caractérisée en ce que lesdites parties en saillie sont séparées d'une distance ($d_1$) inférieure à l'épaisseur (D) du pied des dents des pignons (P) avec lesquels la chaîne doit coopérer, les plaques intérieures d'un même maillon intérieur comportant des faces externes respectives qui sont espacées l'une de l'autre d'une distance plus faible à l'emplacement des plages d'extrémité ($d_3$) qu'à celui des plages centrales ($d_4$).

2. Chaîne de transmission suivant la revendication 1, du type comportant des rouleaux (30) disposés autour de chaque articulation entre maillons intérieurs et maillons extérieurs, caractérisée en ce que les parties (16c) en saillie vers l'intérieur s'étendent sur une zone dont le diamètre correspond à peu près à celui des rouleaux (30).

3. Chaîne de transmission suivant la revendication 2, caractérisée en ce que lesdites parties (16c) en saillie délimitent dans la zone voisine de la plage centrale une portion de surface (16a) adjacente à la périphérie des rouleaux (30) et adaptée pour servir de surface d'appui pour les dents des pignons.

4. Chaîne de transmission suivant l'une quelconque des revendications 1 à 3, caractérisée en ce que les plaques intérieures (10) comportent un dégagement (17, 18) le long des bords internes de leurs plages ou parties d'extrémité.

5. Chaîne de transmission suivant la revendication 4, caractérisée en ce que ce dégagement (17) a la forme d'un chanfrein.

6. Chaîne de transmission suivant la revendication 5, caractérisée en ce que ledit chanfrein (17) s'étend entre deux arcs de cercle à peu près concentriques ayant respectivement l'un un rayon inférieur à celui du rouleau (30) et l'autre un rayon supérieur à celui de ce rouleau.

7. Chaîne de transmission suivant la revendication 4, caractérisée en ce que le dégagement (18) a la forme d'un décrochement à peu près à angle droit.

8. Chaîne de transmission suivant l'une quelconque des revendications 1 à 7, caractérisée en ce que les plages d'extrémité (12) des plaques intérieures (10) s'étendent radialement au-delà des plages d'extrémité (22) des plaques extérieures.

9. Chaîne de transmission suivant l'une quelconque odes revendications 1 à 8, caractérisée en ce que les plaques extérieures (20) comportent dans leurs plages d'extrémité (22) des bords (25) à section progressivement décroissante, qui s'étendent au-delà des décrochements (16b) des plaques intérieures (10).

10. Chaîne de transmission suivant l'une quelconque des revendications 2 à 9, caractérisée en ce que les rouleaux ont une épaisseur sensiblement inférieure à l'intervalle ($d_2$) entre les plages ou parties centrales (11) des plaques intérieures.

11. Chaîne de transmission à rouleaux suivant la revendication 10, caractérisée en ce que les rouleaux (30) sont des rondelles découpées dans une tôle.

12. Chaîne de transmission à rouleaux suivant l'une quelconque des revendications précédentes, caractérisée en ce qu'elle est utilisée dans une transmission à dérailleur, pour cycle ou analogue.

## Patentansprüche

1. Antriebskette, umfassend Innenglieder, die aus zwei zueinander parallelen Innenplatten (10) gebildet sind, und an den Innengliedern schwenkbar gelagerte Außenglieder, die gleichfalls aus zwei zueinander parallelen Außenplatten (20) bestehen, wobei die Innenplatten und die Außenplatten jeweils einen Zentralbereich (11; 21) sowie zwei Endbereiche (12; 22) aufweisen, auf deren Höhe die Schwenkachsen (23) angeordnet sind und wobei die Innenplatten (10) in ihren Endbereichen (12) jeweils auf ihren beiden Seitenflächen verformt sind und zum Inneren der Kette vorspringende Bereiche (16c) bilden,
dadurch gekennzeichnet,
daß die vorspringenden Bereiche durch einen Abstand ($d_1$) voneinander getrennt sind, welcher kleiner als die Dicke (D) der Zahnfüße der Zahnräder (P) ist, mit denen die Kette zusammenwirkt, wobei der Abstand ($d_3$) zwischen den Außenflächen (16d) der Endbereiche der Innenplatten kleiner als der Abstand ($d_4$) zwischen den Außenseiten (16e) der Zentralbereiche der Innenplatten ist.

2. Antriebskette nach Anspruch 1, mit jeweils auf den Schwenkachsen zwischen den Innengliedern und den Außengliedern angeordneten Rollen (30),
dadurch gekennzeichnet,
daß die zum Inneren vorspringenden Bereiche (16c) sich über eine Zone erstrecken, deren Durchmesser annähernd dem der Rollen (30) entspricht.

3. Antriebskette nach Anspruch 2,
dadurch gekennzeichnet,
daß die vorspringenden Bereiche (16c) in der dem Zentralbereich benachbarten Zone einen Flächenabschnitt (16a) begrenzen, welcher der Peripherie der Rollen (30) benachbart ist und dazu bestimmt ist, als Stützfläche für die Zähne der Zahnräder zu dienen.

4. Antriebskette nach einem der Ansprüche 1 bis 3,
dadurch gekennzeichnet,
daß die Innenplatten (10) entlang den Innenkanten der Endbereiche einen Absatz (17, 18) aufweisen.

5. Antriebskette nach Anspruch 4,
dadurch gekennzeichnet,
daß der Absatz (17) die Form einer Abschrägung hat.

6. Antriebskette nach Anspruch 5,
dadurch gekennzeichnet,
daß die Abschrägung (17) sich zwischen zwei annähernd konzentrischen Kreisbögen erstreckt, deren einer einen gegenüber dem Radius der Rolle (30) kleineren und deren anderer einen gegenüber dem Radius der Rolle größeren Radius hat.

7. Antriebskette nach Anspruch 4,
dadurch gekennzeichnet,
daß der Absatz (18) die Form einer annähernd rechtwinkligen Stufe hat.

8. Antriebskette nach einem der Ansprüche 1 bis 7,
dadurch gekennzeichnet,
daß die Endbereiche (12) der Innenplatten (10) radial über die Endbereiche (22) der Außenplatten überstehen.

9. Antriebskette nach einem der Ansprüche 1 bis 8,
dadurch gekennzeichnet,
daß die Außenplatten (20) an ihren Endbereichen (22) Kanten (25) mit progressiv abnehmender Querschnittsdicke haben, die sich über Abstufungen (16b) der Innenplatten (10) erstrecken.

10. Antriebskette nach einem der Ansprüche 2 bis 9,
dadurch gekennzeichnet,
daß die Rollen eine Dicke haben, die wesentlich kleiner als der Abstand ($d_2$) zwischen den Zentralbereichen (11) der Innenplatten ist.

11. Antriebskette mit Rollen nach Anspruch 10,
dadurch gekennzeichnet,
daß die Rollen (30) aus einem Blech ausgeschnittene Lochscheiben sind.

12. Antriebskette mit Rollen nach einem der vorstehenden Ansprüche,
dadurch gekennzeichnet,
daß sie bei einem Gangschaltungsantrieb bei einem Fahrrad oder dergleichen verwendet wird.

## Claims

1. A transmission chain of the type comprising inner links consisting of two inner plates (10) disposed parallel, outer links articulated on the inner links and likewise consisting of two outer plates (20) disposed parallel, the inner plates and the outer plates comprising a central zone (11; 21) and two end zones (12; 22) where the pivot pins (23) are disposed, the inner plates (10) being deformed in their end zones (12) on both their faces and delimiting projecting portions (16c) directed towards the interior of the chain, characterized in that the said projecting portions are separated by a distance ($d_1$) less than the thickness (D) of the roots of the teeth of the sprockets (P) wiht which the chain has to cooperate, a distance ($d_3$) separating outer faces (16d) of the end zones of the inner plates being less than a distance ($d_4$) between outer faces (16e) of the central zones of these inner plates

2. A transmission chain according to claim 1, of the type comprising rollers (30) disposed around each articulation between inner links and outer links, characterized in that the inwardly projecting portions (16c) extend over a zone whose diameter corresponds approximately to that of the rollers (30).

3. A transmission chain according to claim 2, characterized in that the said projecting portions (16c) delimit, in the zone adjoining the central zone, a portion of surface (16a) adjacent to the periphery of the rollers (30) and adapted to serve as support surface for the teeth of the sprockets.

4. A transmission chain according to any one of Claims 1 to 3, characterized in that the inner plates (10) have an undercut (17, 18) along the inner edges of their end zones or portions.

5. A transmission chain according to claim 4, characterized in that this undercut (17) has the shape of a bevel.

6. A transmission chain according to claim 5, characterized in that said bevel (17) extends between two approximately concentric arcs of circles having, in the one case, a radius smaller than that of the roller (30) and, in the other case, a radius greater than that of the said roller.

7. A transmission chain according to claim 4, characterized in that the undercut (18) is in the form of an approximately right-angled step.

8. A transmission chain according to any one of Claims 1 to 7, characterized in that the end zones (12) of the inner plates (10) extend radially beyond the end zones (22) of the outer plates.

9. A transmission chain according to any one of Claims 1 to 8, characterized in that the outer plates (20) have, in their end zones (22), edges (25) of progressively decreasing section which extend beyond the steps (16b) of the inner plates (10).

10. A transmission chain according to any one of Claims 2 to 9, characterized in that the rollers have a thickness substantially smaller than the space ($d_2$) between the central zones or portions (11) of the inner plates.

11. A roller transmission chain according to Claim 10, characterized in that the rollers (30) are washers cut out of a metal sheet.

12. A roller transmission chain according to any one of the preceding claims, characterized in that it is used in a derailleur transmission for cycles or the like.

FIG.1

FIG.3

FIG.2

FIG.4